# EUROPEAN PATENT SPECIFICATION

(11) **EP 1 802 380 B1**
(45) Date of publication and mention of the grant of the patent: **06.08.2014**
(21) Application number: 05761954.6
(22) Date of filing: 27.06.2005
(51) Int. Cl.: A63F 3/06, B42D 15/00, B32B 7/12, B32B 15/12, B41M 3/00, B41M 7/00

(54) **LOTTERY TICKET WITH METALIZED SCRATCH OFF LAYER**
LOTTERIESCHEIN MIT METALLISCHER RUBBELSCHICHT
BILLET DE LOTERIE POURVU D'UNE COUCHE A GRATTER METALLISEE

(30) Priority: 08.07.2004 CA 2471024
(43) Date of publication of application: 04.07.2007
(73) Proprietor: Pollard Banknote Limited Partnership, Winnipeg MB R3T 1L7 (CA)
(72) Inventor: TAYLOR, Brett Charles, Winnipeg, Manitoba R2J 4A6 (CA); KAUS, Tyson D., Winnipeg, Manitoba R3Y 1P9 (CA); BRICKWOOD, Michael John, Winnipeg, Manitoba R3W 1H1 (CA); HAMILTON, Greg, Winnipeg, Manitoba R3T 1L7 (CA); SCRYMGEOUR, Lyle H., Oakbank, Mantioba R0E 1J0 (CA)
(74) Representative: Jostarndt, Hans-Dieter
(86) International application number: PCT/CA2005/001013
(87) International publication number: WO 2006/005156

(56) References cited:
- WO-A1-99/65578
- WO-A1-02/093474
- WO-A1-03/066344
- US-A- 4 790 565
- US-A- 5 981 040
- US-B2- 6 623 039
- 'Pollard's millenium holografx tickets to generate excitement for bclc' POLLARD BANKNOTE LIMITED, [Online] XP008116292 Retrieved from the Internet: <URL:http://www.pollardbanknote.com/_pressr eleases/2002_03_and_prior/press121399.html>

## Description

The present invention relates generally to the field of game or lottery tickets which include a scratch-off layer covering game indicia which can be exposed by the player removing the layer for playing of the game or lottery.

The game provided on each substrate sheet may be for prizes both monetary and product related or may be merely for entertainment where no gambling or prize is involved. The type and value of any prizes can vary widely. The games may be pre-determined, otherwise known as "instant win" tickets or may include elements of skill or chance.

The games concerned are preferably instant win type games where the result is entirely predetermined, since such games are generally preferred in a lottery situation in order to ensure that the total winnings is predetermined. However the present invention is not limited to the type of game to be played and can include probability or other games which include game indicia covered by a scratch-off coating.

The construction may also be used in situations where the main objective is for other purposes than gambling such as in promotional games or games of fun for children or others where no gambling or prizes are involved.

Many such tickets are used directly in a lottery situation so that the tickets have no other relevance other than the playing of the lottery or game by which the player may win monetary or other prizes as part of the lottery or gaming situation. However attention has been recently given to other uses of such tickets such as promotional items used by manufacturers of other products to enhance the sale of the product, or as part of packaging or in other situations where the substrate acts in another capacity and the lottery ticket aspect is merely one part of its function.

The marketing of lottery tickets is primarily based on the psychology of impulse buying so that the ticket itself must be inherently attractive to the potential customer sufficiently to trigger the sale. Particular attention therefore applied to generating attractive graphics and an attractive appearance of the game face of the ticket.

For this reason high quality graphics and full four colour printing are used in the printing of the product. This is of particular importance in the area at the game data.

Tickets of this type primarily utilize scratch-off technology for covering the game data and techniques for applying the scratch-off coating in a manner which provides the necessary protection and security for the game data have become well established. On top of the scratch-off coating it is common to print additional graphics, often in four colour printing for the purposes of providing the required attractive appearance of the ticket.

It is also known that metalized coatings can be applied to products to provide a reflective appearance which yet further enhances the attractiveness and eye-appeal of the product concerned. Attempts have therefore been made to manufacture lottery tickets which have a metalized or reflective appearance at particular locations on the ticket. Up until now, however, such tickets have been manufacture by utilizing a substrate which is itself formed with a metalized or reflective layer. The printing is then applied on to the metalized layer which the printing including the necessary coatings for defining the game area, for applying the game indicia and for covering the game indicia with a secure scratch-off coating. Thus tickets of this type have often the metalized or reflective areas in those locations where no printing has been applied and therefore in those areas which are remote form the game indicia. Alternatively, the printing onto a metalized or foil laminated substrate has used an arrangement in which the game data is either printed directly onto the foil or onto a screened white lily pad in the game area so that the ticket retains a metallic appearance in the game area due to this technique. While such tickets have been manufactured, the improved in attractiveness have generally been insufficient to warrant the additional expense of utilizing the reflective or holographic substrate. Thus such tickets printed onto holographic substrates carry a very high cost and thus are limited to high end products or special events such as Christmas tickets.

Reflective substrates of this type can be embossed with areas of a particular reflective angle so that the surface appears to change as the angle of viewing varies across the surface. This technique is commonly known as "holographic" and is used on many products to define a surface which is highly attractive to the eye.

Up till now such holographic lottery tickets have been manufactured using the above technique in which the substrate itself is holographic and the printed layers are applied in to of the holographic substrate.

The manufacturer of lottery tickets of this type requires a high level of sophistication to ensure the proper levels of security. The ticket must be immune to attack by various techniques including high levels of reflected or transmitted light, attempts to lift or perforate, the scratch off coating, chemical or liquid attacks, all of which are designed to expose the game data without removing the scratch-off coating in a manner which indicates that the ticket has been played. Many such lottery tickets have high prize values so that the incentive to breach the security is very high. Certain laboratories have therefore been established to attempt to breach the security of all lottery tickets with only those that pass the rigorous testing being acceptable for sale to the marketplace.

Yet further it is necessary for lottery tickets to have a shelf life of up to two years without degradation of the product leading to the security being breached or the scratch-off coating being difficult to remove.

In order therefore to manufacture an acceptable ticket it is necessary to provide all of the above features.

Document WO-A1- 02/093474 discloses all the technical features set out in the preamble of claims 1 and 7.

A promotional coupon having very limited prize value and therefore every low security requirements has been offered for sale utilizing a foil manufactured by API Group PLC of UK which is applied onto an adhesive from Akzo Nobel Inc. The adhesive is applied directly on to the varnish covering the game data printed on to a substrate and the foil is transfer from a carrier onto the adhesive. The intention is that the foil forms a scratchable coating. However this product is unsatisfactory for lottery tickets in that it does not provide the required security nor a suitable scratch off layer which acts in a manner conventionally acceptable in lottery tickets.

### SUMMARY OF THE INVENTION

It is one object of the present invention therefore to provide an improved lottery ticket to which includes a metalized reflective or metalized holographic appearance at the game data.

According to one aspect of the invention there is provided a lottery ticket comprising:
a substrate layer;
a game area defined on a front surface of the substrate layer;
indicia defining game data printed on the substrate layer in the game area;
the substrate layer being arranged to or having one or more coatings thereon which are arranged to prevent access to the game data from a rear surface of the substrate;
at least one fixing layer applied over the game data in the game area so as to prevent release of the printed game data from the substrate layer;
at least one opaque scratch-off layer applied over the at least one fixing layer, the scratch-off layer being arranged such that it separates from the at least one fixing layer and breaks down into fragments when scratched by a player;
an adhesive layer applied over at least a part of the opaque scratch-off layer;
and a metal layer attached to the adhesive layer;
the metal layer and the adhesive layer arranged such that they break down into fragments with the scratch-off layer when scratched by the player.

In one arrangement, the metal layer may embossed to provide a holographic effect, but this is not essential and the metal layer may be merely reflective or even matt.

Preferably the adhesive is UV curable since this is advantageous for rapid and simple processing but it is not essential.

In one arrangement, the metal layer and the adhesive layer cover substantially the whole of the game area as a solid block. Alternatively, the metal layer and the adhesive layer may cover only selected areas of the game area.

In this alternative arrangement, there may be applied printed graphics between the areas of the metal layer or onto the metal layer itself.

In a further alternative the metallic layer may be applied over both the game area onto the scratch-off material and onto additional areas directly adjacent the game area or more remote as solid or as defined graphics, in which case the printed layers may be alongside the metallic layer or printed over it.

The substrate layer may be formed by a foil layer or the substrate layer may include card or paper stock covered by coatings arranged to prevent access to game data through the substrate.

Preferably the metal layer comprises a single layer of deposited metal.

Additional printed graphics may be applied onto the metal layer.

According to a second aspect of the invention there is provided a method of manufacturing a lottery ticket comprising:
providing a substrate layer;
defining a game area on a front surface of the substrate layer;
printing indicia defining game data on the substrate layer in the game area;
the substrate layer being arranged to or having one or more coatings thereon which are arranged to prevent access to the game data from a rear surface of the substrate;
applying at least one fixing layer over the game data in the game area so as to prevent release of the printed game data from the substrate layer;
applying at least one opaque scratch-off layer over the at least one fixing layer,
applying an adhesive layer over at least a part of the opaque scratch-off layer;
providing a metal layer on a transfer carrier layer;
contacting the metal layer on to the substrate with the adhesive layer exposed thereon such that the metal layer transfers from the carrier layer preferentially onto the adhesive layer leaving other parts of the metal layer which are spaced from the adhesive layer attached to the carrier layer;
and arranging the scratch-off layer with the adhesive layer and the metal layer thereon such that the scratch-off layer, the adhesive layer and the metal layer separate from the at least one fixing layer and break down into fragments when scratched by a player.

### BRIEF DESCRIPTION OF THE DRAWINGS

One embodiment of the invention will now be described in conjunction with the accompanying drawings in which:
Figure 1 is a schematic illustration showing the layers of a prior art lottery ticket product.
Figure 2 is the schematic illustration of the layers of a lottery ticket product according to the present invention.
Figure 3 is a schematic illustration of the layers of a second embodiment of a lottery ticket product according to the present invention.
Figure 4 is a schematic illustration of a method of manufacturing the lottery ticket of Figure 2 or 3.

In the drawings like characters of reference indicate corresponding parts in the different figures.

### DETAILED DESCRIPTION

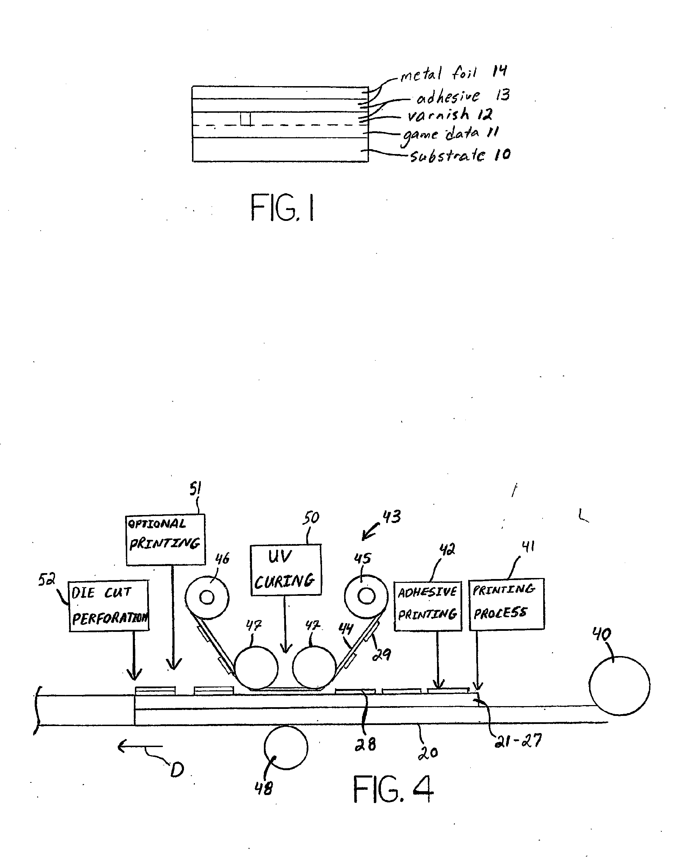

In Figure 1 is shown a cross-section of a lottery ticket of the prior art which comprises a paper stock substrate 10. On the substrate is printed game data 11 which is covered by a layer of varnish 12. The varnish 12 is directly covered by a layer of an adhesive 13 onto which is attached a metalized or foil layer 14.

The metalized or foil layer is of a type manufactured by API Group PLC of the UK under the trademark "API die LESS". This metalized layer can be a simple flat layer formed by depositing metal ions onto a carrier substrate which is then transfer onto the layer of adhesive 13 and the carrier moved away leaving the metal layer preferentially attached to the adhesive. Such metal layers can be simply reflective or can be embossed to provide the known "holographic" effect.

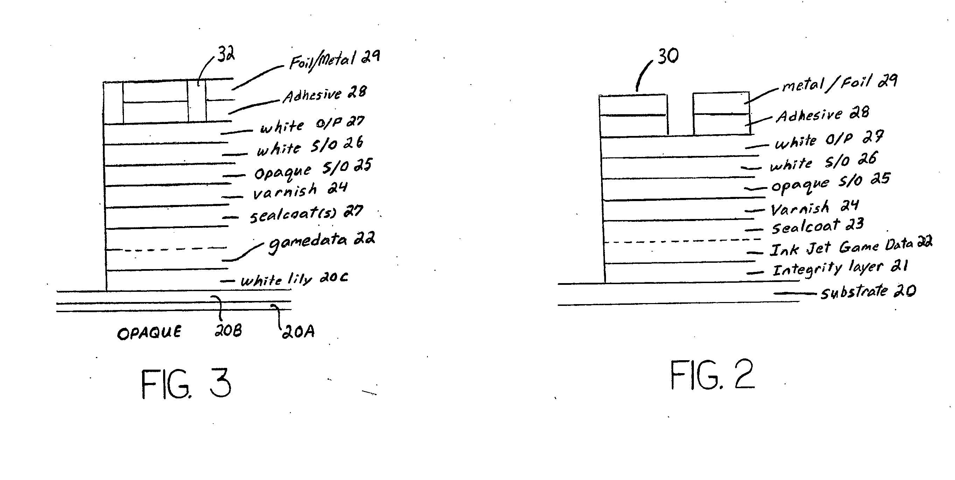

Turing now to the inventions as shown in Figure 2 and 3, in Figure 2 there is shown a ticket formed of a substrate layer 20 on which is applied one or more integrity layers 21 which are designed to resist chemical or fluid attack through a porous substrate such as paper or card stock attempting to access the game data. On top of the integrity layer or layers 21 is applied the printed game data 22 which is covered by one or more fixing layers such as a seal coat 23 and/or varnish 24 which may prevent chemical attack and which lock the game data physically in to place to prevent the game data from being removed by scratching.

On top of the varnish layer 24 is applied one or more scratch off layers 25 which are formed of an opaque or white material. Such opaque scratch off materials are well known and may contain graphite or other black or light impenetrable materials to prevent passage of light in either direction which could reveal information about the game data underneath the scratch-off layers. The scratch-off layers are formed primarily of latex which can breakdown under scratching or friction into fragments. The material itself has no linking materials through its structure so that it cannot be peeled off as a layer but instead simply breaks down into individual fragments or components. Thus the scratch-off layers together combine to form a scratch-off coating which can be removed in a single scratching action breaking down all of the layers to form the composite fragments which breakaway and are discarded. On top of the scratch-off layers is provided a white over printing layer which forms in effect an undercoat for material covering the scratch-off coatings. The integrity layer or layers, the fixing layer or layers and the scratch-off layer or layers are well known to one skilled in the art such that the selection and use thereof as required in any particular construction can be made by the skilled person using conventional knowledge.

On top of the over printing layer 27 is provided a layer of adhesive 28 which carries a metalized or foil layer 29. The adhesive layer 28 and its associated metalized layer 29 may cover the entire region of the game area or may be broken into separate sections which cover individual parts of the game area. The metalized layer 29 is reflective or holographic and thus provides an attractive outer surface 30 which is presented toward the player during review of the ticket surface.

The adhesive layer and the metalized layer are selected and arranged so that they breakdown when scratched with the scratch off layers 25 and 26 together with the over printing layer 27. Thus the whole of the structure defined by the layers 25 , 26, 27, 28 and 29 breaks down into fragments when scratched and cannot be peeled as integral layer.

For this purpose suitable adhesive are selected which do not form an integral bond or link across the area of the adhesive but instead simply provide an adhesive effect between the metal layer and the scratch-off layers so that breaking down of the scratch-off layers also breaks the adhesive into sections also breaking down the metalized layer into sections.

The metalized section therefore has a thickness which is sufficiently thin to prevent the metalized layer from having structural strength and merely provides a decorative coating. The thickness therefore is sufficient simply to provide the reflective appearance or the holographic appearance obtained by embossment. The thickness is therefore preferable less than 25,7 mm (1.010 inch) and more preferably in the range 0,05 to 0,23 mm (0.002 to 0.009 inch). This thickness of metal layer can be carried on a carrier sheet having a thickness of the order of the range 1,22 to 1,52 mm (0.048 and 0.060 inch).

As the adhesive layer 28 and the metalized layer 29 are not required to cover the game data, they may be arranged as simple decoration over small parts or larger parts as required of the game area. Additional adhesive and additional metalized layer parts may also be applied to other areas of the lottery ticket to match or mirror or co-operate with parts in the game area to provide a whole attractive appearance defined by the total graphics on the lottery ticket.

In Figure 3 is shown an alternative embodiment similar to that of Figure 2 in which the card or paper substrate 20 is replaced by a substrate 20A which is covered by a layer of foil 20B. The foil is wholly opaque and moisture impermeable so that there may be no requirement for any layers similar to the integrity layer or layers 21. In their stead is provided a layer 20C simply of a white ink which forms a white base for receiving the game data 22. Again the layers necessary for printing on a foil substrate are known to one skilled in the art.

A further modification is shown in Figure 3 in which additional printing layers 32 are provided in the areas between the sections of adhesive layer 28 and associated metallic layer 29. Thus the whole of the game areas is covered either by additional printing layers 32 or by the metallic layer 29 so that the whole of the game area is either printed in various colours or covered by the reflective or metalized layer 29 providing a whole graphics area over the game area.

Turning now to Figure 4 there is shown a method of forming the ticket of Figure 2. the method includes providing the substrate layer 20 from a supply 40 which is then covered by the layers 21 through 27 by a printing process schematically indicated at 41. On top of the layers 21 through 27 is printed the adhesive layer 28 using an adhesive printing process 42.

The adhesive is generally applied using a flexographic process including a flexographic plate. The flexographic plate, with the desired image, transfers the adhesive from the conventional anilox roll to the substrate. As indicated generally at 43 is provided a system for transferring the metalized layer 29 from a carrier film 44 on to the adhesive layer 28. Thus a metalized layer is supplied over a required width on the carrier film 44 supplied from a supply roll 45 to a take up roll 46. With the substrate moving in the direction D, the carrier film 44 is transported out under a roller 47 between which the carrier film 44 and the substrate 20 are pinched relative to a nip roller 48. This nipping action acts to attach parts of the metal layer 29 preferentially to the adhesive which are then pulled away form the carrier film 44 in a transfer action leaving the carrier film and any remaining parts of the metal layer to be returned to the take up roll 46.

The adhesive used may be of the type available from Akzo-Nobel which is UV curable for rapid curing down stream of the transfer process 43. A UV curing system 50 is thus provided for applying curing UV light to the adhesive while the carrier film in contact with the adhesive to complete the layers 21 through 29. Optional printing 51 can be provided down stream of the UV curing to apply additional printing layers on top of or between the sections of the metal layer and adhesive layer.

Down stream of the printing process, the tickets are cut or perforated in to separate ticket sections by a dye cutting system generally indicated at 52.

The arrangement described above therefore provides a novel lottery ticket which has suitable scratching characteristics in that the selection of the adhesive, the metal layer and the scratch-off coatings is such that all of these layers break away simultaneously into fragments without the possibility for peeling or slicing a complete integral section of the coating away form the game data. The adhesive can be selected merely to provide the attachment of the metal layer to the scratch-off coating without the necessity for the adhesive being individually scratchable since it breaks down as part of the scratch-off layers. The adhesive is selected so that is does not provide an integral layer or skin which can be peeled away but instead breaks down into fragments.

The ticket provides the security system previously established in view of the presence of the layers 21 through 27 which conventionally provide the required security.

The metal layer may be used simply as a decorative coating rather than a security or scratch-off coating and therefore may be applied only over a part of the game area giving the opportunity for different graphics effects. However even if the metallic layer is applied to only selected areas it may still provide additional security effects. Thus for example it may be effective in providing further enhancements to security in terms of various types of compromise using certain chemicals for example sodium hydroxide.

The presence to the metal layer also may further enhance security in that it indicates any attempt to slice away a part or the whole of the scratch-off coatings. Thus one known mode of attack is to utilize a knife to slice off the whole of the scratch-off coating as an integral layer, to read the underlying game data and then to relay the sliced off coating over the game data. The use of a metal layer having particular reflective characteristics such as the holographic appearance or even simply a shiny reflective appearance causes the reflective characteristics to be entirely lost when the layer including the metal is sliced away due to folding or crumpling of the metal layer. Such attempts therefore are immediately visually apparent.

## Claims

1. A method of manufacturing a lottery ticket comprising:
providing a substrate layer (20);
defining a game area on a front surface of the substrate layer;
printing indicia defining game data (22) on the substrate layer in the game area;
the substrate layer (20) being arranged to or having one or more coatings (21) thereon which are arranged to prevent access to the game data from a rear surface of the substrate;
applying at least one fixing layer (23) over the game data in the game area which is arranged to prevent release of the printed game data from the substrate layer;
applying at least one opaque scratch-off layer (25) over the at least one fixing layer,
a metal layer (29) being adhesively attached onto the opaque scratch-off layer;
and arranging the scratch-off layer (25) with the adhesive layer (28) and the portions of the metal layer (29) thereon such that the scratch-off layer, the adhesive layer and the portions of the metal layer separate from the at least one fixing layer and break down into fragments when scratched by a player;
**CHARACTERIZED IN THAT** the metal layer is adhesively attached by:
applying a rear surface of an adhesive layer (28) onto at least a part of a front surface of the previously applied opaque scratch-off layer (25) so that the adhesive layer when applied has an exposed front surface;
providing the metal layer (29) carried on a transfer carrier layer (44) so that the metal layer (29) has an exposed first surface and a second surface attached to the carrier layer;
contacting the exposed first surface of the metal layer (29) on to the exposed front surface of the adhesive layer (28);
and causing those parts of the metal layer (29) which are contacted by the front surface of the adhesive layer (28) to transfer from the carrier layer (44) onto the front surface of the adhesive layer (28) leaving other parts of the metal layer (29) which are not contacted by the front surface of the adhesive layer (28) remaining attached to the carrier layer (44) such that the parts of the metal layer (29) which remain attached to the carrier layer (44) are carried away from the ticket.

2. The method according to Claim 1 wherein the metal layer (29) is embossed to provide a holographic effect.

3. The method according to Claim 1 or 2 wherein the metal layer (29) and the adhesive layer (28) cover only selected areas of the game area and wherein there is applied printed graphics (32) between the selected areas of the metal layer.

4. The method according to Claim 1 or 2 wherein an area on the substrate layer covered by the front metal layer (29) and the adhesive layer (28) covers only part of an area on the substrate covered by the scratch-off layer (25).

5. The method according to any one of Claims 1 to 4 wherein there is applied printed graphics onto the metal layer.

6. The method according to any preceding claim wherein the scratch-off layer (25) is applied using a printing process (41).

7. A lottery ticket comprising:
a substrate layer (20);
a game area defined on a front surface of the substrate layer;
indicia defining game data (22) printed on the substrate layer (20) in the game area;
the substrate layer being arranged to or having one or more coatings (21) thereon which are arranged to prevent access to the game data from a rear surface of the substrate;
at least one fixing layer (23) applied over the game data in the game area which is arranged to prevent release of the printed game data from the substrate layer;
at least one opaque scratch-off layer (25) applied over the fixing layer, the scratch-off layer being arranged such that it separates from the fixing layer and breaks down into fragments when scratched by a player;
an adhesive layer (28) applied over at least a part of a front surface of the opaque scratch-off layer so as to be attached thereto;
and a front metal layer (29) adhesively attached onto the opaque scratch-off layer (25);
the front metal layer (29) and the adhesive layer (28) being arranged such that they break down into fragments with the scratch-off layer (25) when scratched by the player.
CHARACTERIZED IIN THAT the scratch-off layer (25) is applied using a printing process (41) and that the front metal layer (29) has a rear surface directly attached to the adhesive layer (28) and a front surface of the front metal layer providing a front surface of the lottery ticket which is exposed to view.

8. The lottery ticket according to Claim 7 wherein the metal layer (29) is embossed to provide a holographic effect.

9. The lottery ticket according to Claim 7 or 8 wherein the metal layer (29) and the adhesive layer (28) cover only selected areas of the game area and wherein there is applied printed graphics (32) between the selected areas of the metal layer.

10. The lottery ticket according to Claim 7 or 8 wherein an area on the substrate layer covered by the front metal layer (29) and the adhesive layer (28) covers only part of an area on the substrate covered by the scratch-off layer (25).

11. The lottery ticket according to any one of Claims 7 to 10 wherein there is applied printed graphics onto the metal layer.

## Patentansprüche

1. Verfahren zum Herstellen eines Lotterieloses, wobei das Verfahren umfasst:
Bereitstellen einer Substratschicht (20);
Definieren eines Spielbereichs auf einer vorderen Oberfläche der Substratschicht;
Drucken von Markierungen, die Spieldaten (22) definieren, auf die Substratschicht in den Spielbereich;
wobei die Substratschicht (20) darauf ausgelegt ist, oder eine oder mehrere Beschichtungen (21) aufweist, die dafür ausgelegt sind, den Zugang zu den Spieldaten von einer hinteren Oberfläche des Substrats aus zu verhindern;
Auftragen mindestens einer Fixierschicht (23) über den Spieldaten in dem Spielbereich, die dafür ausgelegt ist, das Lösen der gedruckten Spieldaten von der Substratschicht zu verhindern;
Auftragen mindestens einer undurchsichtigen Rubbelschicht (25) über der mindestens einen Fixierschicht,
wobei auf der undurchsichtigen Rubbelschicht eine Metallschicht (29) haftend befestigt ist;
und Anordnen der Rubbelschicht (25) mit der Haftschicht (28) und mit den Abschnitten der Metallschicht (29) darauf in der Weise, dass sich die Rubbelschicht, die Haftschicht und die Abschnitte der Metallschicht von der mindestens einen Fixierschicht trennen und in Bruchstücke zerfallen, wenn sie durch einen Spieler gerubbelt werden;
**DADURCH GEKENNZEICHNET, DASS** die Metallschicht haftend befestigt wird durch:
Auftragen einer hinteren Oberfläche einer Haftschicht (28) mindestens auf einen Teil einer vorderen Oberfläche der zuvor aufgetragenen undurchsichtigen Rubbelschicht (25) in der Weise, dass die Haftschicht, wenn sie aufgetragen ist, eine freiliegende vordere Oberfläche aufweist;
Bereitstellen der auf einer Übertragungsträgerschicht (44) getragenen Metallschicht (29) in der Weise, dass die Metallschicht (29) eine freiliegende erste Oberfläche und eine an der Trägerschicht befestigte zweite Oberfläche aufweist;
Herstellen eines Kontakts der freiliegenden ersten Oberfläche der Metallschicht (29) mit der freiliegenden vorderen Oberfläche der Haftschicht (28);
und Veranlassen, das jene Teile der Metallschicht (29), mit denen die vordere Oberfläche der Haftschicht (28) in Kontakt tritt, um sie von der Trägerschicht (44) auf die vordere Oberfläche der Haftschicht (28) zu übertragen, andere Teile der Metallschicht (29), die mit der vorderen Oberfläche der Haftschicht (28) nicht in Kontakt stehen, an der Trägerschicht (44) befestigt zu lassen, sodass diejenigen Teile der Metallschicht (29), die an der Trägerschicht (44) befestigt bleiben, von dem Los abgetragen werden.

2. Verfahren nach Anspruch 1, wobei die Metallschicht (29) geprägt wird, um einen holographischen Effekt bereitzustellen.

3. Verfahren nach Anspruch 1 oder 2, wobei die Metallschicht (29) und die Haftschicht (28) nur ausgewählte Bereiche des Spielbereichs bedecken und wobei zwischen den ausgewählten Bereichen der Metallschicht eine Druckgraphik (32) aufgetragen wird.

4. Verfahren nach Anspruch 1 oder 2, wobei ein von der vorderen Metallschicht (29) und von der Haftschicht (28) bedeckter Bereich auf der Substratschicht nur einen Teil eines von der Rubbelschicht (25) bedeckten Bereichs auf dem Substrat bedeckt.

5. Verfahren nach einem der Ansprüche 1 bis 4, wobei auf die Metallschicht eine Druckgraphik aufgetragen wird.

6. Verfahren nach einem vorhergehenden Anspruch, wobei die Rubbelschicht (25) unter Verwendung eines Druckprozesses (41) aufgetragen wird.

7. Lotterielos, das umfasst:
eine Substratschicht (20);
einen Spielbereich, der auf einer vorderen Oberfläche der Substratschicht definiert ist;
Markierungen, die Spieldaten (22) definieren, die in den Spielbereich auf die Substratschicht (20) gedruckt sind;
wobei die Substratschicht darauf ausgelegt ist,
oder eine oder mehrere Beschichtungen (21) darüber aufweist, die dafür ausgelegt sind, den Zugang zu den Spieldaten von einer hinteren Oberfläche des Substrats aus zu verhindern;
mindestens eine Fixierschicht (23), die über den Spieldaten in dem Spielbereich aufgetragen ist, die dafür ausgelegt ist, das Lösen der gedruckten Spieldaten von der Substratschicht zu verhindern;
mindestens eine undurchsichtige Rubbelschicht (25),
die über der Fixierschicht aufgetragen ist, wobei die Rubbelschicht so ausgelegt ist, dass sie sich von der Fixierschicht trennt und in Bruchstücke zerfällt, wenn sie von einem Spieler gerubbelt wird;
eine Haftschicht (28), die mindestens über einem Teil einer vorderen Oberfläche der undurchsichtigen Rubbelschicht in der Weise aufgetragen ist, dass sie daran befestigt ist;
und eine vordere Metallschicht (29), die auf der undurchsichtigen Rubbelschicht (25) haftend befestigt ist;
wobei die vordere Metallschicht (29) und die Haftschicht (28) so ausgelegt sind, dass sie mit der Rubbelschicht (25) in Bruchstücke zerfallen, wenn sie durch den Spieler gerubbelt werden,
**DADURCH GEKENNZEICHNET, DASS** die Rubbelschicht (25) unter Verwendung eines Druckprozesses (41) aufgetragen worden ist und dass die vordere Metallschicht (29) eine hintere Oberfläche aufweist, die an der Haftschicht (28) direkt befestigt ist, und
dass eine vordere Oberfläche der vorderen Metallschicht eine vordere Oberfläche des Lotterieloses bereitstellt, die für die Ansicht freiliegt.

8. Lotterielos nach Anspruch 7, wobei die Metallschicht (29) geprägt ist, um einen holographischen Effekt zu bieten.

9. Lotterielos nach Anspruch 7 oder 8, wobei die Metallschicht (29) und die Haftschicht (28) nur ausgewählte Bereiche des Spielbereichs bedecken und wobei zwischen den ausgewählten Bereichen der Metallschicht eine Druckgraphik (32) aufgetragen ist.

10. Lotterielos nach Anspruch 7 oder 8, wobei ein von der vorderen Metallschicht (29) und von der Haftschicht (28) bedeckter Bereich auf der Substratschicht nur einen Teil eines von der Rubbelschicht (25) bedeckten Bereichs auf dem Substrat bedeckt.

11. Lotterielos nach einem der Ansprüche 7 bis 10, wobei auf die Metallschicht eine Druckgraphik aufgetragen ist.

## Revendications

1. Procédé de fabrication d'un ticket de loterie, comprenant la fourniture d'une couche de substrat (20),
la définition d'une zone de jeu sur une face avant de la couche de substrat,
l'impression de données de jeu définissant des indices (22) sur la couche de substrat dans la zone de jeu ;
la couche de substrat (20) étant agencée avec ou présentant un ou plusieurs revêtement(s) dessus qui sont agencés pour éviter l'accès aux données de jeu depuis une face arrière du substrat ;
l'application d'au moins une couche de fixation (23) sur les données de jeu dans la zone de jeu qui est agencée pour éviter que les données de jeu imprimées ne soient libérées de la couche de substrat;
l'application d'au moins une couche à gratter opaque (25) sur l'au moins une couche de fixation,
une couche métallique (29) étant fixée de façon adhésive sur la couche à gratter opaque ;
et l'agencement de la couche à gratter (25) avec la couche adhésive (28) et les parties de la couche métallique (29) dessus de telle façon que la couche à gratter, la couche adhésive et les parties de la couche métallique se séparent de l'au moins une couche de fixation et rompent en fragments lorsqu'elles sont grattées par un joueur :
**caractérisé en ce que** la couche métallique est fixée de manière adhésive par :
l'application d'une face arrière d'une couche adhésive (28) sur au moins une partie d'une face avant de la couche à gratter opaque (25) appliquée auparavant de façon à ce que la couche adhésive ait une face avant exposée lorsqu'elle est appliquée ;
la fourniture de la couche métallique (29) disposée sur une couche porteuse de transfert (44) de façon à ce que la couche métallique (29) présente une première face exposée et une seconde face fixée à la couche porteuse ;
la mise en contact de la première face exposée de la couche métallique (29) sur la face avant exposée de la couche adhésive (28) ;
et faire en sorte que ces parties de la couche métallique (29) qui sont touchées par la face avant de la couche adhésive (28) passent de la couche porteuse (44) à la face avant de la couche adhésive (28), laissant les autres parties de la couche métallique (29) qui ne sont pas touchées par la face avant de la couche adhésive (28) fixées à la couche porteuse (44) de telle sorte que les parties de la couche métallique restant fixées à la couche porteuse (44) soient éloignées du ticket.

2. Procédé selon la revendication 1, dans lequel la couche métallique (29) est en relief pour fournir un effet holographique.

3. Procédé selon la revendication 1 ou 2, dans lequel la couche métallique (29) et la couche adhésive (28) couvrent uniquement des zones sélectionnées de la zone de jeu et dans lequel des graphiques imprimés (32) sont appliqués entre les zones sélectionnées de la couche métallique.

4. Procédé selon la revendication 1 ou 2, dans lequel une zone sur la couche de substrat couverte par la couche métallique avant (29) et la couche adhésive (28) couvre seulement une partie d'une zone sur le substrat couverte par la couche à gratter (25).

5. Procédé selon l'une quelconque des revendications 1 à 4, dans lequel des graphiques imprimés sont appliqués sur la couche métallique.

6. Procédé selon l'une quelconque des revendications précédentes, dans lequel la couche à gratter (25) est appliquée par un procédé d'impression (41).

7. Ticket de loterie comprenant :
une couche de substrat (20),
une zone de jeu définie sur une face avant de la couche de substrat ;
des données de jeu définissant des indices (22) imprimées sur la couche de substrat (20) dans la zone de jeu ;
la couche de substrat (20) étant agencée avec ou présentant un ou plusieurs revêtement(s) dessus qui sont agencés pour éviter l'accès aux données de jeu depuis une face arrière du substrat ;
au moins une couche de fixation (23) appliquée sur les données de jeu dans la zone de jeu qui est agencée pour éviter que les données de jeu imprimées ne soient libérées de la couche de substrat ;
au moins une couche à gratter opaque (25) appliquée sur la couche de fixation, la couche à gratter étant agencée de façon à se séparer de la couche de fixation et à se rompre en fragments lorsqu'elle est grattée par un joueur ;
une couche adhésive (28) appliquée sur au moins une partie d'une face avant de la couche à gratter opaque de façon à être fixée dessus ;
et une couche métallique avant (29) fixée de façon adhésive sur la couche à gratter opaque (25) ;
la couche métallique (29) et la couche adhésive (28) étant agencées de telle sorte qu'elles rompent en fragments avec la couche à gratter (25) lorsqu'elles sont grattées par le joueur,
**caractérisé en ce que** la couche à gratter (25) est fixée par un procédé d'impression (41) et que la couche métallique avant (29) présente une face arrière fixée directement sur la couche adhésive (28) et une face avant de la couche métallique avant fournissant une face avant du ticket de loterie qui est exposée à la vue.

8. Ticket de loterie selon la revendication 7, dans lequel la couche métallique (29) est en relief pour fournir un effet holographique.

9. Ticket de loterie selon la revendication 7 ou 8, dans lequel la couche métallique (29) et la couche adhésive (28) couvrent uniquement des zones sélectionnées de la zone de jeu et dans lequel des graphiques imprimés (32) sont appliqués entre les zones sélectionnées de la couche métallique.

10. Ticket de loterie selon la revendication 7 ou 8, dans lequel une zone de la couche de substrat couverte par la couche métallique (29) et la couche adhésive (28) couvre uniquement une partie d'une zone du substrat couverte par la couche à gratter (25).

11. Ticket de loterie selon l'une quelconque des revendications 7 à 10, dans lequel des graphiques imprimés sont appliqués sur la couche métallique.
